# FASCICULE DE BREVET EUROPEEN

(11) **EP 1 728 369 B1**
(45) Date de publication et mention de la délivrance du brevet: **14.08.2013**
(21) Numéro de dépôt: 05739722.6
(22) Date de dépôt: 22.03.2005
(51) Int. Cl.: H04L 12/58

(54) **PASSERELLE DE PUBLICATION D'ETATS DE COMMUNICATION**
KOMMUNIKATIONSZUSTANDS-VERÖFFENTLICHUNGS-GATEWAY
COMMUNICATION-STATE-PUBLISHING GATEWAY

(30) Priorité: 25.03.2004 FR 0403059
(43) Date de publication de la demande: 06.12.2006
(73) Titulaire: FRANCE TELECOM, 75015 Paris (FR)
(72) Inventeur: FELTEN, Frédéric, F-22140 Tonquedec (FR)
(74) Mandataire: Regimbeau
(86) Numéro de dépôt international: PCT/FR2005/050186
(87) Numéro de publication internationale: WO 2005/094021

(56) Documents cités:
- WO-A-01/56308
- WO-A-03/003694
- CAMPBELL B ET AL: "Request for Comments 3428: Session Initiation Protocol (SIP) Extension for Instant Messaging" NETWORK WORKING GROUP, 1 décembre 2002 (2002-12-01), XP015009171
- CROCKER D ET AL: "Common Presence and Instant Messaging (CPIM) (draft-ietf-impp-cpim-03.txt)" NETWORK WORKING GROUP, 14 août 2002 (2002-08-14), XP015002047

## Description

La présente invention concerne un procédé de publication d'états de communication de terminaux entre une passerelle de publication et un serveur de messagerie instantanée.

Des protocoles émergeants, tels que SIMPLE (Session Initiation Protocol for Instant Messaging and Presence Leveraging Extension) ou Wireless Village IMPS (Instant Messaging and Presence Service), permettent entre des terminaux de connaître l'état de communication de l'un d'entre eux. Deux désavantages importants de ces protocoles sont la nécessité d'adapter le terminal au protocole utilisé et de mettre en oeuvre le même protocole dans des terminaux devant communiquer entre eux.

De même sur internet, un protocole de messagerie instantanée permet à un ordinateur connecté de connaître l'état de communication d'un autre ordinateur et à un usager de publier volontairement l'état de communication de son ordinateur. Mais ce dernier protocole reste cantonné au réseau internet.

La demande de brevet international WO 03/003694 divulgue un procédé de détection et de transport d'informations de présence dynamiques à travers un réseau de communications.

Dans chaque dispositif client, tel qu'un terminal mobile, est configuré un logiciel spécifique, par exemple sous forme d'applet de présence, pour collecter et reporter des informations de présence du dispositif client à travers une passerelle SMS-SIP ("Short Message Service - Session Initiation Protocol" en anglais) à un agent de présence connecté au réseau Internet et pour recevoir et traiter une ou plusieurs notifications provenant d'au moins un agent de présence. Le dispositif client subit ainsi des modifications pour l'équiper d'un logiciel spécifique.

Le dispositif client utilise le service de messages courts SMS pour communiquer avec la passerelle et la passerelle utilise le protocole SIP pour communiquer avec l'agent de présence. Par conséquent, le procédé décrit dans la demande de brevet international est dépendant des technologies et des réseaux d'accès des dispositifs clients.

La présente invention a pour objectif de rendre accessible à un terminal l'état de communication d'un autre terminal sans recourir à l'établissement d'une communication de bout en bout entre les terminaux et indépendamment de la technologie et des réseaux d'accès des terminaux.

A cette fin, un procédé de publication d'état de communication d'un terminal connecté à un réseau d'accès détectant un état de communication du terminal notifié en tant qu'état de communication courant à un moyen de publication d'état de communication relié au réseau d'accès et à un réseau de paquets est caractérisé en ce qu'il comprend :
une transformation de l'état de communication courant du terminal en un état de communication de messagerie instantanée dans le moyen de publication, et un transfert de l'état de communication de messagerie instantanée depuis le moyen de publication à un serveur de messagerie instantanée relié au réseau de paquets.

Le procédé peut comprendre, préalablement à la transformation, une sélection d'un état de communication volontaire et une sélection d'un état de communication apparent correspondant à l'état de communication volontaire dans une base de données en fonction d'un identificateur du terminal transmis par le moyen de publication, et lorsque l'état de communication apparent est différent de l'état de communication courant, une modification de l'état de communication courant en l'état de communication apparent dans le moyen de publication.

Ainsi avantageusement l'usager du terminal peut sélectionner un état de communication de son terminal défini indépendamment de l'état détecté de celui-ci et plus généralement des états de terminal reconnus par le réseau d'accès du terminal, pour le faire correspondre à un état de communication apparent imposé par l'usager vis-à-vis des tiers souhaitant communiquer avec le terminal de l'usager.

L'état de communication volontaire peut être sélectionné par le terminal depuis un serveur relié au réseau de paquets, puis mémorisé dans la base de données.

Le procédé peut comprendre également une sélection d'une action courante à établir dans le réseau d'accès du terminal et associée à l'état de communication courant dans une base de données en fonction d'un identificateur du terminal transmis par le moyen de publication afin que cette action soit ultérieurement commandée par le moyen de publication, mais aussi une sélection d'une action associée à l'état de communication volontaire et une modification de l'action courante en l'action associée à l'état de communication volontaire.

L'action associée à l'état de communication volontaire peut être sélectionnée par le terminal depuis un serveur relié au réseau de paquets, puis mémorisé dans la base de données.

L'invention concerne également un système de publication d'état de communication d'un terminal connecté à un réseau d'accès détectant un état de communication du terminal notifié en tant qu'état de communication courant comprenant un moyen de publication d'état de communication relié au réseau d'accès et à un réseau de paquets, caractérisé en ce que le moyen de publication comprend :
un moyen pour transformer l'état de communication courant du terminal en un état de communication de messagerie instantanée, et un moyen pour transférer l'état de communication de messagerie instantanée depuis le moyen de publication à un serveur de messagerie instantanée relié au réseau de paquets.

D'autres caractéristiques et avantages de la présente invention apparaîtront plus clairement à la lecture de la description suivante de plusieurs réalisations préférées de l'invention, à titre d'exemples non limitatifs, en référence aux dessins annexés correspondants dans lesquels :
- la figure 1 est un bloc-diagramme schématique d'un système de publication d'états de communication mettant en oeuvre une passerelle de publication d'états de communication selon l'invention ; et
- la figure 2 est un algorithme d'un procédé de publication d'états de communication selon l'invention.

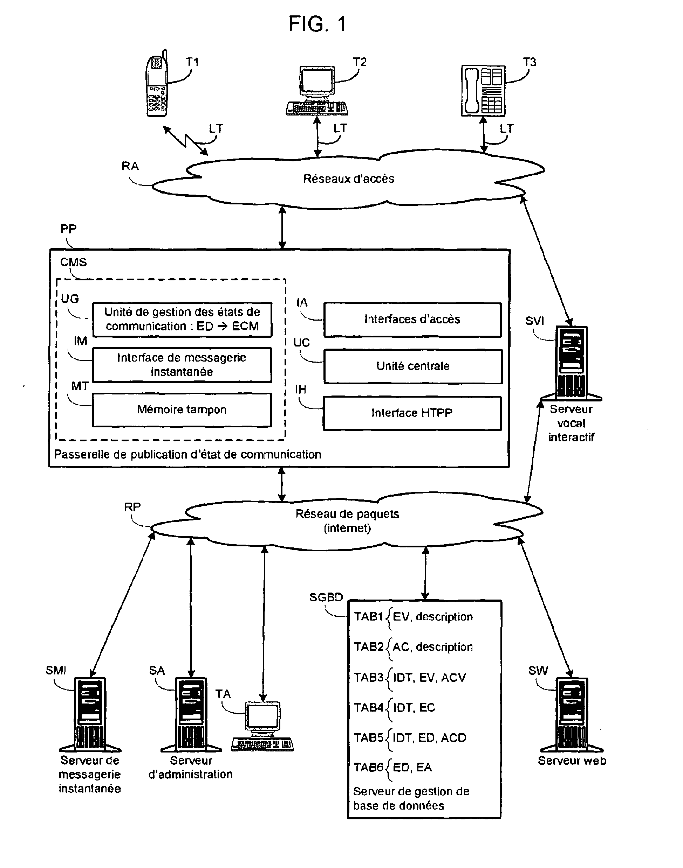

En référence à la figure 1, le **système de publication** selon l'invention comprend principalement une passerelle de publication d'états de communication PP, un serveur de messagerie instantanée SMI, un serveur web SW, un serveur de gestion de base de données SGBD, un serveur d'administration SA, un terminal d'administrateur TA, un serveur vocal interactif SVI, et au moins un terminal d'usager T. Dans la figure 1, on a représenté trois terminaux d'usager T1, T2 et T3 désignés indifféremment par T dans la suite de la description.

La passerelle de publication PP communique avec les serveurs SMI, SW, SGBD, SA et SVI à travers un réseau de paquets à haut débit RP de type internet, et avec des terminaux d'usager T à travers des réseaux d'accès RA. Le serveur vocal SVI communique avec les terminaux d'usager T à travers les réseaux d'accès RA.

Dans le cadre d'un réseau de communication intelligent, la passerelle de publication PP est un point de commande de service ou est reliée à un point de commande de service.

Selon la réalisation illustrée à la figure 1, le terminal T est relié à un réseau d'accès respectif RA par une liaison LT.

Le terminal T est par exemple un terminal de radiocommunications cellulaire mobile T1, la liaison LT est un canal de radiocommunications, et le réseau d'accès respectif RA comprend le réseau fixe d'un réseau de radiocommunications, par exemple de type GSM (Global System for Mobile communications) avec un service GPRS (General Packet Radio Service), ou de type UMTS (Universal Mobile Telecommunications System).

Selon un autre exemple, le terminal T est un ordinateur personnel T2, relié directement par modem à la liaison LT de type ligne xDSL ou RNIS (Réseau Numérique à Intégration de Services) reliée au réseau d'accès RA correspondant.

Selon un autre exemple, le terminal T est un terminal fixe de télécommunications T2, la liaison LT est une ligne téléphonique et le réseau d'accès respectif RA comprend le réseau téléphonique commuté.

Selon d'autres exemples, le terminal d'usager T comprend un dispositif ou objet électronique de télécommunications personnel à l'usager qui peut être un assistant numérique personnel communiquant PDA. Le terminal T peut être tout autre terminal domestique portable ou non tel qu'une console de jeux vidéo, ou un récepteur de télévision intelligent coopérant avec une télécommande à afficheur ou un clavier alphanumérique servant également de souris à travers une liaison infrarouge.

Les terminaux d'usager T et les réseaux d'accès RA ne sont pas limités aux exemples ci-dessus et peuvent être constitués par d'autres terminaux et réseaux d'accès connus.

L'invention définit trois états de communication : un état de communication détecté ED, un état de communication volontaire EV et un état de communication apparent EA. Un état de communication détecté ED est un état d'un terminal détecté par des moyens internes au réseau d'accès respectif RA et transmis à la passerelle de publication PP, tels que "décroché" (prise de liaison), "en attente de numérotation", "libre", "occupé", "indisponible", "raccroché" (libération). Les états de communication détectés ED sont liés aux réseaux d'accès des terminaux et par conséquent leur nombre est fini.

Un état de communication volontaire EV reflète l'état d'un terminal décidé par l'usager du terminal vis-à-vis d'autres moyens, tels que "ne pas déranger", "absent momentanément", "en congé". Les états de communication volontaires ne sont pas limités en nombre, et de nouveaux états de communication volontaires peuvent être aisément créés.

Un état de communication apparent EA correspond à un état de communication dans le réseau d'accès RA d'un terminal qui est classique. Aussi, les états de communication apparents sont définis respectivement comme les états de communication détectés.

Il existent des équivalences entre les états de communication apparents EA et les états de communication volontaires EV. Un ou plusieurs états de communication volontaires EV correspondent à un état de communication apparent EA. Par exemple, les états de communication volontaires EV "ne pas déranger" et "en congé" peuvent correspondre à l'état de communication apparent "occupé". Selon un autre un autre exemple, un usager tiers qui appelle le terminal T dont l'usager a décidé de ne pas être dérangé pendant une période prédéterminée, prend connaissance de l'état de communication apparent "indisponible" qui correspond à l'état de communication volontaire "ne pas déranger pendant la période prédéterminée" décidé par l'usager du terminal T, alors que pendant la période prédéterminée, le terminal T peut être utilisé pour des communications de départ.

Le serveur de gestion de base de données SGBD contient principalement une base de données dans laquelle sont mémorisés des données relatives à l'administration de la passerelle PP tels que des paramètres de configuration, et des tables TAB1 à TAB6 décrites ci-dessous.

La table TAB1 comprend une liste d'états de communication volontaires EV associés respectivement à des descriptions d'état de communication volontaire.

La table TAB2 comprend une liste d'actions AC respectivement associées à des descriptions d'action. Une action est un service établi dans le réseau d'accès RA du terminal T, qu'un usager souhaite faire correspondre à un état de communication de son terminal. Par exemple, si l'état de communication d'un premier terminal d'usager est "occupé", l'appel d'un deuxième terminal appelant le premier terminal est transféré vers le répondeur vocal du premier terminal ; par conséquent l'action est un "transfert vers un répondeur vocal". Dans l'exemple précédent, l'action aurait également pu consister à "envoyer un bip sonore d'avertissement" au premier terminal.

La table TAB3 fait correspondre des identificateurs IDT d'un terminal d'usager abonné à un service de sélection d'état de communication à des états de communication volontaires EV éventuellement associés à une action d'état volontaire ACV.

La table TAB4 fait correspondre des identificateurs IDT de terminaux respectivement à des états de communication courants EC des terminaux.

La table TAB5 fait correspondre chaque identificateur de terminal IDT à un état de communication détecté ED associé à une action d'état détecté ACD.

La table TAB6 fait correspondre un état de communication EV décidé volontairement par l'usager du terminal T à un état de communication apparent EA.

La passerelle de publication PP comprend principalement des interfaces d'accès IA, une unité de gestion des états de communication UG, une interface de messagerie instantanée IM, une mémoire tampon MT, une unité centrale UC et une interface HTPP IH. L'unité de gestion des états de communication UG, l'interface de messagerie instantanée IM et la mémoire tampon MT forment un client de messagerie instantanée CMS par rapport aux serveurs via le réseau RP.

Les interfaces d'accès IA assurent les communications entre la passerelle de publication PP et les réseaux d'accès RA. Les interfaces d'accès IA sont adaptées respectivement aux types des réseaux d'accès et aux protocoles que ceux-ci utilisent, par exemple le protocole INAP (Intelligent Network Application Part) pour le réseau téléphonique commuté, et le protocole CAP (Customized Applications for Mobile network Enhanced Logic Application Part) pour le réseau de radiotéléphonie cellulaire. Les états de communication détectés des terminaux transitent à travers les interfaces d'accès IA.

La mémoire tampon MT mémorise temporairement des contextes de terminaux d'usager pendant le fonctionnement de la passerelle de publication PP. Un contexte contient au moins un identificateur de terminal appelant IDT associé à un état de communication courant EC et éventuellement un identificateur de terminal appelé IDT. Un contexte peut contenir également des informations sur la date de contexte, date à laquelle un changement d'état de communication détecté ED d'un terminal a été notifié à un autre terminal.

L'unité de gestion des états de communication UG transforme des états de communication détectés ED en état de communication de messagerie instantanée ECM. Les états de communication de messagerie instantanée ECM dépendent d'un protocole de messagerie instantanée utilisé entre la passerelle de publication PP et le serveur de messagerie instantanée SMI.

L'interface de messagerie instantanée IM transfère des états de communication de messagerie instantanée ECM au serveur de messagerie instantanée SMI à travers un protocole de messagerie instantanée tels que JABBER, MSN messenger ou ICQ. Par conséquent, l'interface de messagerie instantanée IM est spécifique au protocole de messagerie instantanée utilisé ou intègre des modules spécifiques à chaque protocole afin que l'interface de messagerie IM s'adapte au protocole utilisé par le serveur de messagerie SMI.

L'unité centrale UC interroge via l'interface HTTP IH le serveur de gestion de base de données SGBD afin notamment d'établir une correspondance entre un état de communication détecté ED d'un terminal et une action d'état détecté ACD.

L'interface HTTP IH assure la communication entre la passerelle de publication PP et les serveurs d'administration SA et de gestion de base de données SGBD reliés au réseau de paquets RP à travers le protocole de transport HTTP (HyperText Transfer Protocol).

Le serveur d'administration SA met à disposition du terminal d'administrateur TA une interface logiciel pour que l'usager du terminal d'administrateur TA surveille et administre la passerelle de publication PP. Le serveur d'administration SA communique avec la passerelle de publication PP et le serveur de gestion de base de données SGBD afin d'accéder aux données de configuration de la passerelle de publication PP.

Le terminal d'administrateur TA est typiquement un ordinateur personnel relié au réseau de paquets RP à travers lequel il communique avec le serveur d'administration SA. Le terminal d'administrateur TA dispose de l'interface logiciel après connexion du terminal TA au serveur d'administration SA.

Le serveur de messagerie instantanée SMI est un serveur de messagerie instantanée standard, utilisé généralement dans des services de messagerie instantanée entre des ordinateurs. Le protocole utilisé entre la passerelle de publication PP et le serveur de messagerie instantanée SMI dépend du type du serveur de messagerie SMI. Le serveur de messagerie SMI met à disposition d'un terminal T d'un usager tiers, abonné à un service de consultation d'état de communication de terminal proposé par l'invention, les états de communication de messagerie instantanée ECM d'un ou de plusieurs terminaux connectés aux réseaux RA et/ou au réseau RP. Le terminal de l'usager tiers est bien souvent un ordinateur personnel.

Le serveur web SW et le serveur vocal interactif SVI communiquent avec le serveur de gestion de base de données SGBD à travers le réseau de paquets RP.

Le serveur web SW met à disposition d'un terminal d'usager connecté au réseau de paquets RP et abonné à un service de sélection d'état de communication de terminal proposé par l'invention, une interface logiciel de sélection d'état de communication volontaire d'un ou de plusieurs de ses terminaux. Le terminal d'usager sélectionne dans une liste d'états de communication volontaires, issue de la table TAB1, l'état de communication volontaire EV qu'il souhaite pour son terminal. La correspondance entre l'état de communication volontaire EV sélectionné et l'identificateur de terminal IDT est mémorisée dans la table TAB3.

Dans une variante, le terminal d'usager T sélectionne un état de communication volontaire applicable selon des données d'horodatage, telles qu'une heure ou une date de début, ou tel qu'un intervalle de temps entre deux heures ou dates spécifiques.

De plus, le terminal d'usager sélectionne dans une liste d'action issue de la table TAB2, l'action AC qu'il souhaite associée à un ou plusieurs états de communication volontaires EV. La correspondance entre l'action AC et l'état de communication volontaire EV est mémorisée dans la table TAB3. L'action AC est alors une action d'état volontaire ACV.

Le même serveur web SW, ou un autre serveur web relié au réseau de paquets RP, met à disposition du même terminal d'usager ou d'un terminal d'un autre usager qui est abonné au service de consultation d'état de communication de terminal, une interface logiciel de consultation d'un ou de plusieurs états de communication de messagerie instantanée ECM de terminaux présélectionnés. Le serveur web SW récupère l'information sur les états de communication de messagerie instantanée ECM des terminaux présélectionnés auprès du serveur de messagerie SMI.

Dans une variante, un serveur web mémorise dans une base de données les contextes associés à un terminal afin que l'usager du terminal consulte l'historique de ses appels.

Le serveur vocal interactif SVI offre les mêmes fonctionnalités que le ou les serveurs web SW à travers un service vocal de sélection d'état de communication de terminal et/ou de consultation d'état de communication de terminal.

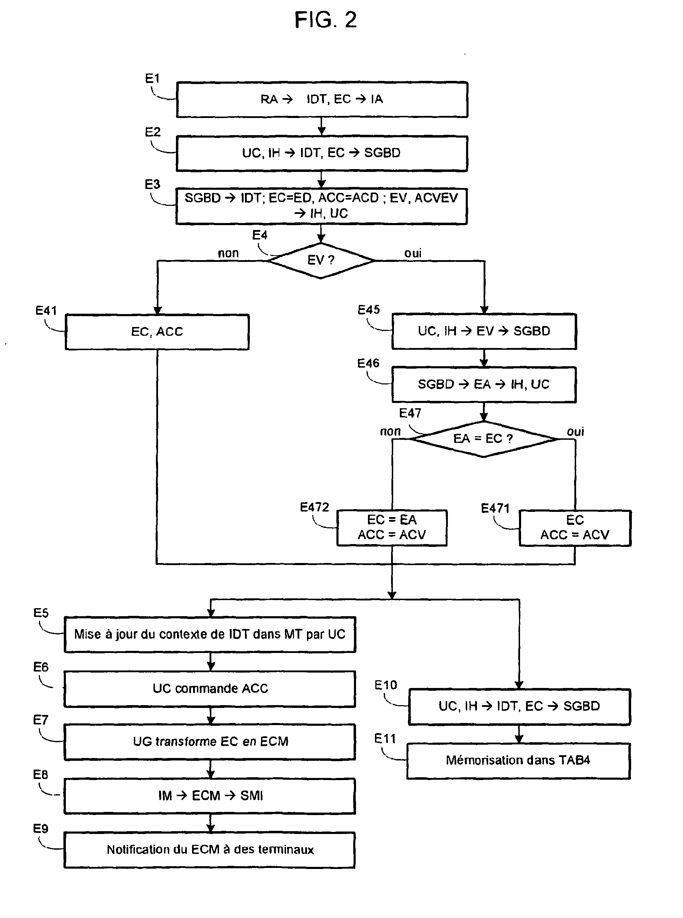

Comme montré à la figure 2, le procédé de publication d'états de communication relativement à un terminal d'usager quelconque T selon l'invention comprend essentiellement des étapes E1 à E11.

L'ensemble des étapes est réalisé pour chaque changement d'état de communication du terminal T.

A l'étape E1, le réseau d'accès RA auquel le terminal T est relié notifie à la passerelle de publication PP un changement d'état de communication détecté ED d'un terminal T, en spécifiant l'identificateur IDT du terminal T et le nouvel état de communication détecté du terminal en tant qu'état de communication courant EC. L'interface d'accès IA, ayant pour rôle d'interfacer le réseau d'accès RA avec la passerelle PP, reçoit l'état de communication courant EC du terminal T.

Comme on le verra par la suite, lors d'une communication d'un terminal tiers avec le terminal T, l'état de communication courant EC sera lu dans le contexte associé au terminal T dans la mémoire tampon MT de la passerelle PP, en tant qu'état de communication détecté si aucun état de communication volontaire n'est associé au terminal T, ou en tant qu'état de communication apparent si un état de communication volontaire a été sélectionné par l'usager du terminal T.

Par exemple, lorsque le terminal T est dans un réseau intelligent basé sur le réseau téléphonique commuté, un commutateur d'accès de service gérant des états de communication détectés ED de terminaux transfère le changement d'état de communication détecté ED du terminal T à un point de commande de service rattaché à un autocommutateur à autonomie d'acheminement du réseau téléphonique commuté. Ce point de commande de service selon l'invention est confondu avec la passerelle de publication PP, ou relié à la passerelle de publication PP.

Par exemple, lors de l'établissement d'une communication entre deux terminaux, les réseaux d'accès RA notifient les nouveaux états de communication détectés des deux terminaux.

L'unité centrale UC envoie une requête contenant l'identificateur de terminal IDT et l'état de communication courant EC au serveur de gestion SGBD par l'intermédiaire de l'interface HTTP IH à l'étape E2. Cette requête interroge le serveur de gestion SGBD sur un éventuel état de communication volontaire EV associé au terminal T.

Le serveur de gestion SGBD sélectionne dans la table TAB3 en fonction de l'identificateur de terminal IDT l'état de communication volontaire EV et l'action d'état volontaire ACV, et dans la table TAB5 l'action courante ACC associée à l'état de communication courant EC, correspondant respectivement à l'action d'état détecté ACD et l'état de communication détecté ED. Le serveur de gestion SGBD transfère avec l'identificateur IDT du terminal T les paramètres précédents EC, ACC et éventuellement EV, ACV dans une réponse à la passerelle de publication PP, et dans celle-ci à l'interface HTTP IH, à l'étape E3.

A l'étape E41, lorsque la réponse du serveur de gestion SGBD informe l'unité centrale UC qu'aucun état de communication volontaire EV n'est associé à l'identificateur IDT du terminal T à l'étape E4, l'état de communication courant EC du terminal n'est pas modifié et est identique au nouvel état de communication détecté transmis à l'étape E1. L'action courante ACC n'est pas modifiée et correspond à l'action associée au nouvel état de communication détecté.

Lorsque l'unité centrale UC est informée qu'un état de communication volontaire EV est associé à l'identificateur IDT du terminal T à l'étape E4, l'unité centrale UC interroge à l'étape E45 le serveur de gestion SGBD en lui transférant l'état de communication volontaire EV précédemment sélectionné, afin que le serveur de gestion SGBD transmette à l'unité centrale UC l'état de communication apparent EA correspondant à l'état de communication volontaire EV dans la table TAB6, à l'étape E46. L'action d'état volontaire ACV s'impose par rapport à l'action courante ACC. Par conséquent, l'action courante ACC est modifiée en l'action d'état volontaire ACV.

Puis l'unité centrale UC compare l'état de communication détecté transmis EDV à l'état de communication courant EC à l'étape E47. Lorsque les deux états de communication EDV et EC sont identiques, l'état de communication courant EC n'est pas modifié à l'étape E471. Lorsque les deux états de communication EA et EC ne sont pas identiques, l'unité centrale UC modifie l'état de communication courant EC afin qu'il soit identique à l'état de communication apparent transmis EA à l'étape E472.

Après l'étape E41, ou E471, ou 472, l'unité centrale UC contrôle à l'étape E5 la mise à jour dans la mémoire tampon MT du contexte correspondant à l'identificateur IDT du terminal T, plus particulièrement la mise à jour de l'état de communication courant EC, ainsi que par exemple la date courante du contexte. Puis l'unité centrale UC commande l'action courante ACC à effectuer à l'étape E6 à travers l'interface d'accès IA.

A l'étape E7, l'unité de gestion des états de communication UG transforme l'état de communication courant EC en un état de communication de messagerie instantanée courant ECM selon le protocole de messagerie instantanée utilisé, l'état de communication courant étant soit un état de communication détecté ED, soit un état de communication apparent EA.

L'interface de messagerie instantanée IM transfère à travers le réseau de paquets RP l'état de communication de messagerie instantanée courant ECM du terminal T au serveur de messagerie instantanée SMI à l'étape E8.

A l'étape E9, le serveur de messagerie instantanée SMI met à disposition de ou notifie à tous les terminaux, abonnés au service de consultation, le nouvel état de communication de messagerie instantanée ECM du terminal T.

En parallèle aux étapes E5 à E9, l'unité centrale UC transmet à travers l'interface HTTP IH au moins l'identificateur IDT du terminal T et l'état de communication courant EC au serveur de gestion de base de données SGBD à l'étape E10.

A l'étape E11, le serveur SGBD mémorise dans la table TAB4 de sa base de données l'état courant de communication EC en correspondance avec l'identificateur de terminal IDT.

Si la passerelle de publication PP est arrêtée, elle se réinitialisera automatiquement en recevant à nouveau des données des réseaux d'accès RA.

Dans une variante, l'ensemble ou une partie des données de la base de données du serveur de gestion de base de données SGBD est mémorisé directement dans une base de données de la passerelle de publication PP.

Dans une autre variante, l'un ou plusieurs des serveurs SA, SGBD et SW est installé dans la passerelle de publication PP.

## Revendications

1. Procédé de publication d'état de communication d'un terminal (T) connecté à un réseau d'accès (RA) détectant un état de communication du terminal notifié (E1) en tant qu'état de communication courant (EC) à un moyen de publication d'état de communication (PP) relié au réseau d'accès (RA) et à un réseau de paquets (RP), **caractérisé en ce qu'**il comprend :
une transformation (E7) de l'état de communication courant (EC) du terminal en un état de communication de messagerie instantanée (ECM) dans le moyen de publication, et
un transfert (E8) de l'état de communication de messagerie instantanée (ECM) depuis le moyen de publication (PP) à un serveur de messagerie instantanée (SMI) relié au réseau de paquets (RP).

2. Procédé conforme à la revendication 1 **caractérisé en ce qu'**il comprend, préalablement à la transformation (E7), une sélection (E3) d'un état de communication volontaire (EV) et une sélection (E46) d'un état de communication apparent (EA) correspondant à l'état de communication volontaire (EV) dans une base de données (SGBD) en fonction d'un identificateur (IDT) du terminal (T) transmis par le moyen de publication (PP), et lorsque l'état de communication apparent (EA) est différent de l'état de communication courant (EC), une modification (E472) de l'état de communication courant (EC) en l'état de communication apparent (EA) dans le moyen de publication (PP).

3. Procédé conforme à la revendication 2, dans lequel l'état de communication volontaire (EV) est sélectionné par le terminal (T) depuis un serveur (SW) relié au réseau de paquets (RP), puis mémorisé dans la base de données (SGBD).

4. Procédé conforme à l'une quelconque des revendications 1 à 3, **caractérisé en ce qu'**il comprend une sélection (E3) d'une action courante (ACC) à établir dans le réseau d'accès (RA) du terminal (T) et associée à l'état de communication courant (EC) dans une base de données (SGBD) en fonction d'un identificateur (IDT) du terminal (T) transmis par le moyen de publication (PP) afin que cette action soit ultérieurement commandée par le moyen de publication (PP).

5. Procédé conforme aux revendications 2 et 4, **caractérisé en ce qu'**il comprend une sélection d'une action (ACV) associée à l'état de communication volontaire (EV) et une modification de l'action courante (ACC) en l'action (ACV) associée à l'état de communication volontaire (EV).

6. Procédé conforme à la revendication 5, dans lequel l'action (ACV) associée à l'état de communication volontaire (EV) est sélectionnée par le terminal (T) depuis un serveur (SW) relié au réseau de paquets (RP), puis mémorisé dans la base de données (SGBD).

7. Système de publication d'état de communication d'un terminal (T) connecté à un réseau d'accès (RA) détectant (E1) un état de communication du terminal notifié en tant qu'état de communication
courant (EC) comprenant un moyen de publication d'état de communication (PP) relié au réseau d'accès (RA) et à un réseau de paquets (RP), **caractérisé en ce que** le moyen de publication (PP) comprend :
un moyen (UG) pour transformer l'état de communication courant (EC) du terminal en un état de communication de messagerie instantanée (ECM), et
un moyen (IM) pour transférer l'état de communication de messagerie instantanée (ECM) depuis le moyen de publication (PP) à un serveur de messagerie instantanée (SMI) relié au réseau de paquets (RP).

8. Système conforme à la revendication 7 **caractérisé en ce que** le moyen de publication (PP) comprend un moyen (UC) pour sélectionner un état de communication volontaire (EV) dans une base de données (SGBD) en fonction d'un identificateur (IDT) du terminal (T), un moyen (UC) pour sélectionner un état de communication apparent (EA) correspondant à l'état de communication volontaire (EV) dans la base de données en fonction de l'identificateur du terminal, et un moyen (UC) pour modifier l'état de communication courant (EC) en l'état de communication apparent (EA) lorsque l'état de communication apparent (EA) est différent de l'état de communication courant (EC).

## Patentansprüche

1. Verfahren zur Veröffentlichung eines Kommunikationszustands eines Terminals (T), das an ein Zugangsnetz (RA) angeschlossen ist, das einen Kommunikationszustand des Terminals (E1) erfasst, der als laufender Kommunikationszustand (EC) an ein Veröffentlichungsmittel eines Kommunikationszustandes (PP), das mit dem Zugangsnetz (RA) verbunden ist, und an ein Paketnetz (RP) mitgeteilt wird, **dadurch gekennzeichnet, dass** es Folgendes umfasst:
eine Umwandlung (E7) des laufenden Kommunikationszustandes (EC) des Terminals in einen Sofortmeldungskommunikationszustand (ECM) in dem Veröffentlichungsmittel, und
eine Weiterleitung (E8) des Sofortmeldungskommunikationszustandes (ECM) von dem Veröffentlichungsmittel (PP) an einen Sofortmeldungsserver (SMI), der mit dem Paketnetz (RP) verbunden ist.

2. Verfahren nach Anspruch 1, **dadurch gekennzeichnet, dass** es vor der Umwandlung (E7) eine Auswahl (E3) eines freiwilligen Kommunikationszustandes (EV) und eine Auswahl (E46) eines offensichtlichen Kommunikationszustandes (EA) entsprechend dem freiwilligen Kommunikationszustand (EV) in einer Datenbasis (SGBD) in Abhängigkeit von einem Identifikator (IDT) des Terminals (T), der von dem Veröffentlichungsmittel (PP) übertragen wird, und wenn sich der offensichtliche Kommunikationszustand (EA) von dem laufenden Kommunikationszustand (EC) unterscheidet, eine Änderung (E472) des laufenden Kommunikationszustandes (EC) in den offensichtlichen Kommunikationszustand (EA) in dem Veröffentlichungsmittel (PP) umfasst.

3. Verfahren nach Anspruch 2, bei dem der freiwillige Kommunikationszustand (EV) von dem Terminal (T) von einem Server (SW) aus gewählt wird, der mit dem Paketnetz (RP) verbunden ist, und dann in der Datenbasis (SGBD) gespeichert wird.

4. Verfahren nach einem der Ansprüche 1 bis 3, **dadurch gekennzeichnet, dass** es eine Auswahl (E3) einer laufenden Aktion (ACC), die in dem Zugangsnetz (RA) des Terminals (T) einzurichten und mit dem laufenden Kommunikationszustand (EC) verbunden ist, in einer Datenbasis (SGBD) in Abhängigkeit von einem Identifikator (IDT) des Terminals (T), der von dem Veröffentlichungsmittel (PP) übertragen wird, damit diese Aktion später von dem Veröffentlichungsmittel (PP) gesteuert wird, umfasst.

5. Verfahren nach den Ansprüchen 2 und 4, **dadurch gekennzeichnet, dass** es eine Auswahl einer Aktion (ACV), die mit dem freiwilligen Kommunikationszustand (EV) verbunden ist, und eine Änderung der laufenden Aktion (ACC) in die mit dem freiwilligen Kommunikationszustand (EV) verbundene Aktion (ACV) umfasst.

6. Verfahren nach Anspruch 5, bei dem die mit dem freiwilligen Kommunikationszustand (EV) verbundene Aktion (ACV) von dem Terminal (T) von einem Server (SW) aus gewählt wird, der mit dem Paketnetz (RP) verbunden ist, und dann in der Datenbasis (SGBD) gespeichert wird.

7. System zur Veröffentlichung eines Kommunikationszustandes eines Terminals (T), das an ein Zugangsnetz (RA) angeschlossen ist, das einen Kommunikationszustand des Terminals (E1) erfasst, der als laufender Kommunikationszustand (EC) mitgeteilt wird, umfassend ein Veröffentlichungsmittel eines Kommunikationszustandes (PP), das mit dem Zugangsnetz (RA) und einem Paketnetz (RP) verbunden ist, **dadurch gekennzeichnet, dass** das Veröffentlichungsmittel (PP) Folgendes umfasst:
ein Mittel (UG), um den laufenden Kommunikationszustand (EC) des Terminals in einen Sofortmeldungskommunikationszustand (ECM) umzuwandeln, und
ein Mittel (IM), um den Sofortmeldungskommunikationszustand (ECM) von dem Veröffentlichungsmittel (PP) an einen Sofortmeldungsserver (SMI), der mit dem Paketnetz (RP) verbunden ist, weiterzuleiten.

8. System nach Anspruch 7, **dadurch gekennzeichnet, dass** das Veröffentlichungsmittel (PP) ein Mittel (UC), um einen freiwilligen Kommunikationszustand (EV) in einer Datenbasis (SGBD) in Abhängigkeit von einem Identifikator (IDT) des Terminals (T) auszuwählen, ein Mittel (UC), um einen offensichtlichen Kommunikationszustand (EA), der dem freiwilligen Kommunikationszustand (EV) entspricht, in der Datenbasis in Abhängigkeit von dem Identifikator des Terminals auszuwählen, und ein Mittel (UC) umfasst, um den laufenden Kommunikationszustand (EC) in den offensichtlichen Kommunikationszustand (EA) umzuändern, wenn sich der offensichtliche Kommunikationszustand (EA) vom laufenden Kommunikationszustand (EC) unterscheidet.

## Claims

1. Method of publishing communication state of a terminal (T) connected to an access network (RA) detecting a communication state of the terminal notified (E1) in the guise of current communication state (EC) to a communication state publishing means (PP) linked to the access network (RA) and to a packet network (RP), **characterized in that** it comprises:
a transformation (E7) of the current communication state (EC) of the terminal into an instant messaging communication state (ECM) in the publishing means, and
a transfer (E8) of the instant messaging communication state (ECM) from the publishing means (PP) to an instant messaging server (SMI) linked to the packet network (RP).

2. Method in accordance with Claim 1, **characterized in that** it comprises, prior to the transformation (E7), a selection (E3) of an intentional communication state (EV) and a selection (E46) of an apparent communication state (EA) corresponding to the intentional communication state (EV) in a database (SGBD) as a function of an identifier (IDT) of the terminal (T) transmitted by the publishing means (PP), and when the apparent communication state (EA) is different from the current communication state (EC), a modification (E472) of the current communication state (EC) into the apparent communication state (EA) in the publishing means (PP).

3. Method in accordance with Claim 2, in which the intentional communication state (EV) is selected by the terminal (T) from a server (SW) linked to the packet network (RP), and then stored in the database (SGBD).

4. Method in accordance with any one of Claims 1 to 3, **characterized in that** it comprises a selection (E3) of a current action (ACC) to be established in the access network (RA) of the terminal (T) and associated with the current communication state (EC) in a database (SGBD) as a function of an identifier (IDT) of the terminal (T) transmitted by the publishing means (PP) so that this action is subsequently controlled by the publishing means (PP).

5. Method in accordance with Claims 2 and 4, **characterized in that** it comprises a selection of an action (ACV) associated with the intentional communication state (EV) and a modification of the current action (ACC) into the action (ACV) associated with the intentional communication state (EV).

6. Method in accordance with Claim 5, in which the action (ACV) associated with the intentional communication state (EV) is selected by the terminal (T) from a server (SW) linked to the packet network (RP), and then stored in the database (SGBD).

7. System for publishing communication state of a terminal (T) connected to an access network (RA) detecting (E1) a communication state of the terminal notified in the guise of current communication state (EC) comprising a communication state publishing means (PP) linked to the access network (RA) and to a packet network (RP), **characterized in that** the publishing means (PP) comprises:
a means (UG) for transforming the current communication state (EC) of the terminal into an instant messaging communication state (ECM), and a means (IM) for transferring the instant messaging communication state (ECM) from the publishing means (PP) to an instant messaging server (SMI) linked to the packet network (RP).

8. System in accordance with Claim 7, **characterized in that** the publishing means (PP) comprises a means (UC) for selecting an intentional communication state (EV) in a database (SGBD) as a function of an identifier (IDT) of the terminal (T), a means (UC) for selecting an apparent communication state (EA) corresponding to the intentional communication state (EV) in the database as a function of the identifier of the terminal, and a means (UC) for modifying the current communication state (EC) into the apparent communication state (EA) when the apparent communication state (EA) is different from the current communication state (EC).
